# EUROPÄISCHE PATENTSCHRIFT

(11) **EP 0 379 857 B1**
(45) Veröffentlichungstag und Bekanntmachung des Hinweises auf die Patenterteilung: **15.09.1993**
(21) Anmeldenummer: 90100069.5
(22) Anmeldetag: 03.01.1990
(51) Int. Cl.: B29C 67/22, B29K 105/04

(54) **Verfahren und Vorrichtung zum Herstellen von Formlingen aus aufgeschäumtem, thermoplastischem Kunststoff**
Method and apparatus for manufacturing articles of an expanded thermoplastic synthetic material
Procédé et dispositif pour fabriquer des objets en matière synthétique thermoplastique expansée

(30) Priorität: 24.01.1989 DE 3902002
(43) Veröffentlichungstag der Anmeldung: 01.08.1990
(73) Patentinhaber: Erlenbach, Hans, D-56355 Lautert (DE)
(72) Erfinder: Erlenbach, Hans, D-56355 Lautert (DE)
(74) Vertreter: Fuchs Mehler Weiss

(56) Entgegenhaltungen:
- DE-A- 2 922 314
- DE-A- 3 115 773
- DE-B- 1 504 957
- DE-C- 3 629 885

## Beschreibung

Die Erfindung betrifft ein Verfahren zum Herstellen von Formlingen aus aufgeschäumtem, thermoplastischem Kunststoff, das vorsieht, vorgeschäumte Kunststoffteilchen unter Anwendung eines Luftstromes in einen Formhohlraum einzutragen und in diesem zu verteilen und unter weiterem Aufschäumen zu einem Formling zu vereinigen, bei welchem Verfahren die den Formhohlraum mit seiner Füllung von vorgeschäumten thermoplastischen Kunststoffteilchen umschließenden Formwandteile dadurch auf eine gewünschte Formtemperatur aufgeheizt werden, daß Wasserdampf unter Druck in mindestens eine an den Außenseiten der Formwandteile angeordnete Dampfkammer eingeleitet wird, nach dem Aufheizen der Formwandteile Dampf von der Dampfkammer in den Formhohlraum und in dessen Füllung übergeführt wird, wodurch die Kunststoffteilchen unter Wirkung von Wärme und Dampf weiter aufgeschäumt und miteinander verschweißt bzw. versintert werden, und bei welchem Verfahren der so gebildete Formling von den Formoberflächen des Formhohlraumes her gekühlt und nach im wesentlichen Erreichen seiner Formbeständigkeit aus dem Formhohlraum entfernt wird.

Die Erfindung bezieht sich auch auf eine Vorrichtung zur Durchführung dieses Verfahrens, die mit einer geteilten, einen Formhohlraum zwischen Formwandteilen bildenden Form versehen ist.

Bei bekannten Verfahren und Vorrichtungen zum Herstellen aufgeschäumter Kunststoff-Formkörper, wie sie beispielsweise aus DE-A1-3 115 773 hervorgehen, wird nach dem Aufheizen der Formwandteile Wasserdampf durch über die Fläche der Formwandteile verteilte Düsen in den Formhohlraum zwischen die erpandierenden, vorgeschäumten Kunststoffteilchen von einer an der Rückseite der Formwandteile gebildeten Dampfkammer her eingeführt. Zum Kühlen der Formwandteile und des im Formhohlraum gebildeten Formkörpers wird anschließend an das Einbringen von Dampf in den Formhohlraum ein Absaugen des Dampfes aus den Dampfkammern vorgenommen und Wasser ggf. gemischt mit Kondensat gegen die Rückseite der Formwandteile gesprüht. Durch das versprühte Wasser oder Kondensat werden in den Dampfkammern vorhandene Dampfreste kondensiert, und es sollen Dampfreste durch die Düsen in den Formwandteile aus dem den Formhohlraum einnehmenden Formling in die Dampfkammer zurückgezogen werden. Tatsächlich ist es aber bei diesem bekannten Verfahren unvermeidlich, daß erhebliche Teile des Dampfes bereits beim Einführen in den Formhohlraum, d.h. zwischen den noch relativ kühlen, erpandierenden Kunststoffteilchen kondensieren und das Zusammenschweißen der Kunststoffteilchen behindern. Ferner wird durch die expandierten und die zum Formling vereinigten Kunststoffteilchen das Zurückströmen von Dampfresten in die Dampfkammer erheblich erschwert, so daß der in den Formhohlraum eingeführte Dampf im wesentlichen im Formkörper kondensiert. Daher sind die auf diese Weise hergestellten Formkörper grundsätzlich feucht und müssen vor dem Einsatz für ihren Verwendungszweck meist mehr oder weniger getrocknet werden.

Aus DE-B-1 504 957 ist es bekannt, trockene Schaumformkörper in der Weise herzustellen, daß der Formhohlraum gegenüber der Dampfkammer druckdicht ausgebildet ist und in den Formwandteilen mittels gesteuerter Ventile nur zeitweilig zu öffnende Überführungsleitungen für den Dampf vorgesehen sind. Diese Ventile zur Dampfüberführung von der Dampfkammer in den Formhohlraum werden erst dann geöffnet, wenn die Formwandteile so weit aufgeheizt sind, daß an diesen eine Kondensation des einströmenden Dampfes nicht mehr auftreten kann. Hierdurch wird zwar die Kondensation von Wasserdampf im Formhohlraum und zwischen den Kunststoffteilchen merklich verringert, jedoch ist ein wirksames Entfernen des tatsächlich für das Aufheizen und Verschweißen bzw. Versintern der expandierten Kunststoffteilchen verbrauchten Wasserdampfes bzw. des dabei entstehenden Kondensates nicht gewährleistet. Im übrigen erfordert die druckdichte Ausbildung des Formhohlraumes gegenüber der Dampfkammer druckfeste, relativ dickwandige Ausbildung und damit hohe Wärmekapazität der Formwandteile, was hohen Energiebedarf für die Durchführung dieses Verfahrens notwendig macht. Nicht zuletzt bedingt die Ausstattung sämtlicher Dampfüberführungen in den Formwandteilen mit Ventileinrichtungen hohen maschinellen Aufwand und damit sehr hohe Entstehungskosten.

Bei ähnlichen Versuchen, trockene Schaumformkörper herzustellen, ist es beispielsweise aus DE-A1-2 922 314, DE-B-2 129 046 und DE-B-2 166 710 bekannt geworden, den zum Verschweißen bzw. Versintern der expandierten Kunststoffteilchen benötigte Wasserdampf überhaupt unabhängig von dem Aufheizen der Formwandteile mittels von den Heiz- und Kühlkammern getrennten besonderen Dampfleitungen unter Zuhilfenahme besonderer Steuerungseinrichtungen vorzunehmen. Das Aufheizen der Formwandteile kann dabei entweder mit Dampf oder mittels flüssiger Wärmeträgermedien erfolgen. Diese bekannte Verfahrensweise und bekannten Vorrichtungen erfordern ebenfalls hohen maschinellen Aufwand, insbesondere eine druckfeste, dickwandige Ausbildung der Formwandteile. Außerdem ist es schwierig und besonders aufwendig die Wärmeübertragung auf die Formwandteile an allen Stellen mit ausreichender Gleichmäßigkeit vorzunehmen.

Ein anderer Versuch, wie er aus DE-B-2 237 397 hervorgeht, sieht zwar die Benutzung von Wasserdampf zum Aufheizen der Formwandteile und deshalb die Bildung von Dampfkammern an der Rückseite der Formwandteile in den Werkzeughälften vor. Jedoch soll der zum Verschweißen, bzw. Versintern der aufschäumenden Kunststoffteilchen in den Formhohlraum einzuführende Dampf nicht aus den Heiz- und Kühlkammern in den Formhohlraum übergeführt werden. Vielmehr sollen in den Werkzeughälften gesonderte Dampfkammern gebildet sein, von welchen Überführungskanäle oder Überführungsleitungen über Düsen in den Formhohlraum führen. Bei diesen bekannten Verfahren und in dieser bekannten Vorrichtung treten jedoch hohe Druckbeanspruchungen an den Formwandteilen auf. Die Formwandteile müssen deshalb relativ dickwandig und stabil ausgebildet sein, was wegen der hohen Wärmekapazität der Formwandteile erhebliche Energieverluste und relativ lange Zykluszeiten im Maschinenbetrieb verursacht.

Dem gegenüber ist es Aufgabe der Erfindung, ein verbessertes Verfahren und eine verbesserte Vorrichtung zum Herstellen von Schaumstoff-Formlingen zu schaffen, dahingehend, daß einerseits nur relativ geringe Druckdifferenzen zwischen dem Formhohlraum und der den Formwandteilen zugeordneten Dampfkammer auftreten und dadurch der Einsatz dünnwandiger, nur mit relativ kleiner Wärmekapazität behafteter Formwandteile ermöglicht wird. Die Temperaturdifferenz zwischen aufgeheiztem Zustand und gekühltem Zustand der Formwandteile soll auf ein Mindestmaß herabgesetzt werden, um die Energieverluste auf ein Mindestmaß zu beschränken. Schließlich soll die für einen Arbeitszyklus der Formmaschine erforderliche Zeit möglichst kurz sein. Bei allem soll sichergestellt sein, daß die aus dem Formhohlraum entnommenen Formlinge glatte, formtreue Oberflächen aufweisen und für ihren Gebrauchseinsatz ausreichend trocken sind, also keine zusätzliche Trocknungsbehandlung benötigen.

Diese Aufgabe wird im erfindungsgemäßen Verfahren dadurch gelöst, daß während des Aufheizens der Formwandteile innerhalb des Formhohlraumes zwischen den Kunststoffteilchen der Füllung ein Lufteinschluß mit zumindest gleichem Druck wie der des zum Aufheizen der Formwandteile eingesetzten Dampfes aufrechterhalten und damit das Eindringen des Dampfes zwischen die Kunststoffteilchen der Füllung verhindert wird, daß zum Einlassen von Dampf in den Formhohlraum nach dem Aufheizen der Formwandteile durch Druckluftabbau der Lufteinschluß weggespült und die Füllung von Kunststoffteilchen im Formhohlraum mit Dampf durchströmt wird, derart, daß das Aufheizen und Verschweißen bzw. Versintern der Kunststoffteilchen ohne Kondensatbildung oder mit nur sehr geringer Kondensatbildung durchgeführt wird.

Durch die Erfindung wird erreicht, daß im Inneren des Formhohlraumes bei allen Verfahrensschritten, d.h. beim Füllen des Formhohlraumes mit aufschäumbaren Kunststoffteilchen, während des Aufheizens der Formwandteile und auch während des Bedampfens der aufzuschäumenden und verschweißenden bzw. versinternden Kunststoffteilchen etwa gleicher Druck aufrechterhalten wird, wie in der an der Außenseite der Formwandteile gebildeten Dampfkammer. Die erfindungsgemäß eingerichtete Durchströmung des Formhohlraumes und dessen Füllung mit Dampf nach erfolgtem Wegspülen des Lufteinschlusses bietet den besonderen Vorteil, daß sich beim Bedampfen, d.h. Aufschäumen und Verschweißen bzw. Versintern der Kunststoffteilchen kaum noch Kondensat bilden kann bzw. sich bildendes Kondensat von dem durchströmenden Dampf mitgenommen wird. Abgesehen von der Tatsache, daß durch nahezu gleiche Druckführung im Formhohlraum und in der Dampfkammer die Formwandteile relativ dünn und mit geringer Wärmekapazität ausgebildet sein können, bietet die Erfindung besonders günstige Möglichkeiten, die einzelnen Verfahrensschritte genauer gegeneinander abzugrenzen, Geringer Luftaustritt aus dem Formhohlraum in die Dampfkammer während des Aufheizens der Formwandteile kann in Kauf genommen werden, bzw. kann eingerichtet werden, um auf diese Weise das Eindringen von Dampf in den Formhohlraum und in dessen Füllung während des Aufheizens der Formwandteile mit Sicherheit zu verhindern. Insbesondere wird durch die Erfindung in einfacher Weise erreicht, daß der Übertritt des Dampfes aus der Dampfkammer in den Formhohlraum nur innerhalb eines genau definierten Zeitabschnittes innerhalb des Verfahrenszykluses erfolgt, Während bei den bekannten Verfahren zur Herstellung von trockenen Formteilen die vollständige bzw, zeitweilige Abdichtung des Formhohlraumes gegenüber den Dampfkammern problembehaftet ist, zeichnet sich das erfindungsgemäße Verfahren dadurch aus, daß es den Wegfall jeglicher Dichtelemente zwischen dem Formhohlraum und den Dampfkammern und damit u.a. eine wesentlich vereinfachte Ausbildung der Formwerkzeuge ermöglicht.

Durch weitgehende Verminderung der Wärmekapazität in den Formwandteilen und definierte Trennung der Verfahrensschritte kann im erfindungsgemäßen Verfahren die Zykluszeit beträchtlich gegenüber derjenigen in herkömmlichen Verfahren vermindert werden. Aus den gleichen Gründen wird im erfindungsgemäßen Verfahren auch eine wesentliche Verminderung der aufzuwendenden Energiemenge erreicht.

Vorteilhafte Weiterbildungen und Ergänzungen des erfindungsgemäßen Verfahrens sind in den Patentansprüchen 2 bis 8 gekennzeichnet.

Für die Durchführung des erfindungsgemäßen Verfahrens eignet sich insbesondere eine Vorrichtung, bei der ausgegangen wird von einer geteilten, einen Formhohlraum zwischen Formwandteilen bildenden Form, in deren Formwerkzeugteilen an der Außenseite der Formwandteile mindestens eine Dampfkammer gebildet ist, die mittels steuerbarer Ventile mit einer Dampfzufuhr, mit der Außenluft und mit einer Absaugeinrichtung (Vakuumeinrichtung) verbindbar ist, wobei an mindestens einem Formwerkzeugteil mindestens eine mit Luftströmung arbeitende Vorrichtung zum Einführen von vorgeschäumten Kunststoffteilchen in den Formhohlraum und zum Einlassen der den Luftdruck im Formhohlraum aufbauenden und aufrechterhaltenden Luftmenge vorgesehen ist und an den Formwandteilen Durchlässe zum Auslassen der zum Füllen eingesetzten Luft und zum Einlassen des zum Verschweißen bzw. Versintern der Kunststoffteilchen eingesetzten Dampfes angebracht sind.

Erfindungsgemäß soll sich diese Vorrichtung dadurch kennzeichnen, daß der Formhohlraum über mindestens eine zur Außenseite der Schäumvorrichtung führenden Verbindungsleitung mit einer ventilgesteuerten Betriebsleitung zum Zu- und Abführen von Druckluft und Absaugen von Dampf verbunden ist, während jeder der an und/oder zwischen den Formwandteilen gebildeten Durchlässe sowohl für das Auslassen der zum Füllen eingesetzten Druckluft aus dem Formhohlraum als auch zum Einlassen des zum Verschweißen der Kunststoffteilchen eingesetzten Dampfes in den Formhohlraum ausgebildet und an für beide Funktionen geeigneter Stelle angeordnet ist und damit eine Durchlaßverbindung zwischen der Dampfkammer und dem Formhohlraum bildet.

Während bei den bisher gängigen Schäumformmaschinen und Schäumformwerkzeugen die düsenförmigen Dampfeinlaßöffnungen zum Formhohlraum auf der Fläche der Formwandteile verteilt angebracht sind und die Auslaßöffnungen für Fülluft vom Formhohlraum direkt nach außen, also nicht in die Dampfkammer führen, sollen jetzt die von der Dampfkammer in den Formhohlraum führenden Einlaßöffnungen für den zum Verschweißen eingesetzten Dampf mit den Auslaßöffnungen für die zum Füllen des Formhohlraumes eingesetzte Luftströmung vereinigt und nur noch an solchen Stellen angeordnet sein, die für beide Funktionen geeignet sind, also nicht mehr in Verteilung über die Fläche der Formwandteile. Dadurch wird bewußt in Kauf genommen, daß die Abführung der zum Einführen und Verteilen der Kunststoffteilchen im Formhohlraum eingesetzten Luft über die Dampfkammer geschieht. Dies hat andererseits zur Folge, daß ein ständiger Druckausgleich zwischen Dampfkammer und Formhohlraum eintritt. Abgesehen von dem relativ geringen Aufschäumdruck der Kunststoffteilchen kann kein nennenswerter Überdruck im Formhohlraum gegenüber der Dampfkammer auftreten und auch umgekehrt kein nennenswerter Überdruck in der Dampfkammer gegenüber dem Formhohlraum. Die Formwandteile sind hinsichtlich ihrer Dicke praktisch nur auf ausreichende Stabilität gegenüber dem Aufschäumdruck des Materials zu berechnen und können wesentlich dünnwandiger ausgebildet werden als bisher. Außer einem erheblichen Preisvorteil bietet diese dünnwandige Ausführung den Vorteil geringer Wärmekapazität und damit schnellerer Temperatursteuerung innerhalb des Formwerkzeugs sowie erheblich geringeren Energieverbrauches. Durch die so erreichte praktisch trägheitsfreie Temperatursteuerung im Inneren des Formwerkzeugs wird in Verbindung mit dem Absaugen des Dampfes aus dem Formhohlraum über eine neuartige Verbindungsleitung erreicht, daß Kondensatbildung im Inneren des Formlings während des Kühlschrittes weitgehend verhindert wird.

Weitere vorteilhafte Merkmale der erfindungsgemäßen Vorrichtung sind in den Patentansprüchen 12 bis 25 gekennzeichnet.

Ausführungsbeispiele der Erfindung werden im folgenden anhand der Zeichnung näher erläutert. Es zeigen:
- Fig. 1: eine erfindungsgemäße Schäumvorrichtung in einfacher Ausführungsform der Erfindung;
- Fig. 2: den Bereich 2 der Figur 1 in vergrößerter Darstellung;
- Fig. 3: den Bereich 2 der Figur 1 in vergrößerter Darstellung und etwas abgeänderter Ausführungsform;
- Fig. 4: einen Steuerungsplan für eine Schäumvorrichtung nach Figur 1 bis 3 zur Durchführung des erfindungsgemäßen Verfahrens und
- Fig. 5: eine Schäumvorrichtung in abgewandelter Ausführungsform in entsprechender Darstellungsweise wie Figur 1.

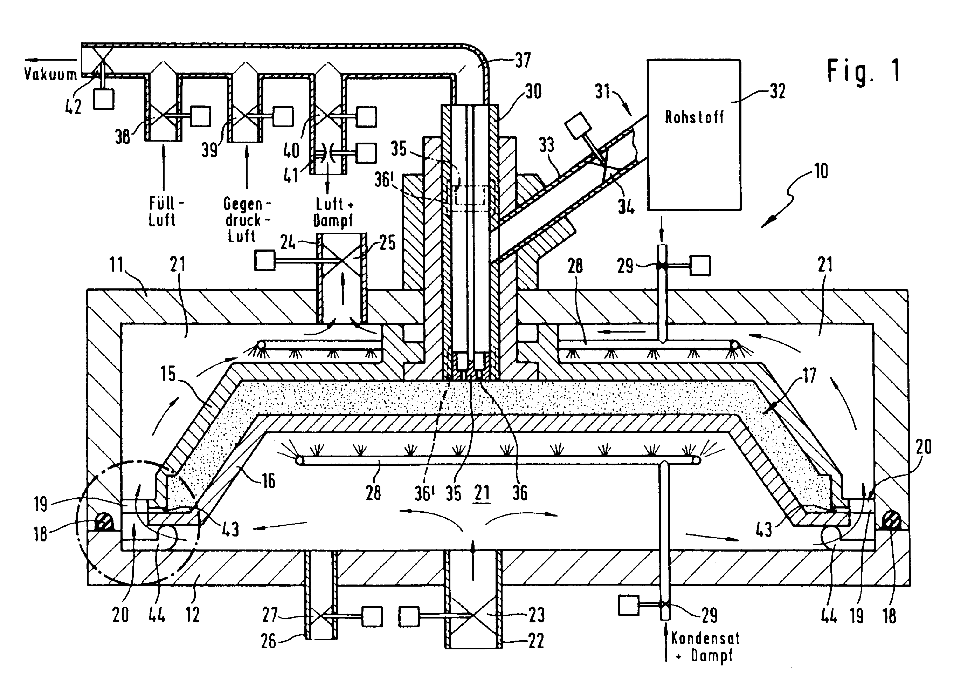

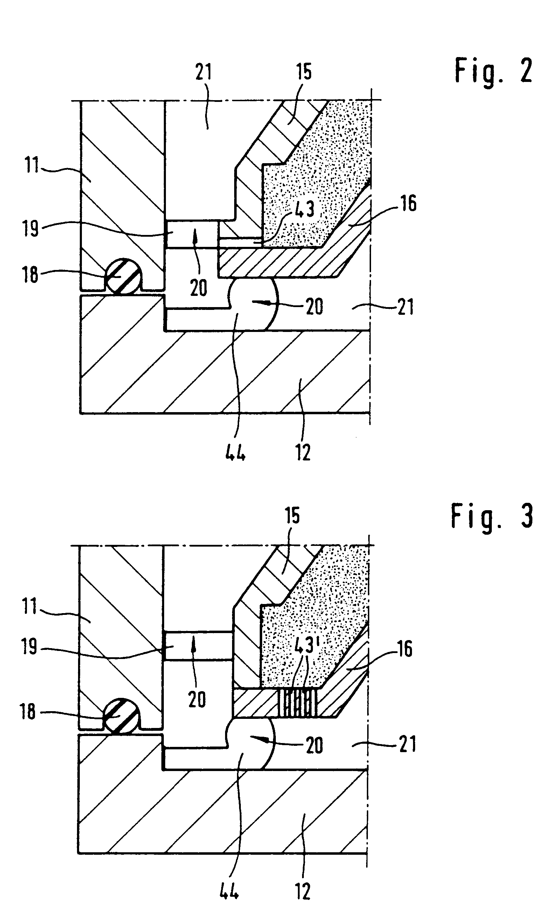

Im Beispiel der Figuren 1 bis 4 handelt es sich um eine Vorrichtung zum Herstellen von Formlingen aus aufgeschäumtem Kunststoff, beispielsweise aufgeschäumtem Polystyrol. Das in Figur 1 gezeigte Schäumvorrichtung 10 weist zwei Dampfkammerhälften, nämlich einen Haubenteil 11 und einen Kernteil 12 auf. In jede dieser Dampfkammerhälften sind jeweils eine oder mehrere entsprechende Formwandteile 15 bzw. 16 eingesetzt. Zwischen den beiden Formwandteilen 15 (Haube) und 16 (Kern) ist ein Formhohlraum 17 gebildet. Der Haubenteil 11 und der Kernteil 12 sind voneinander trennbar und werden zum Schließen der Form zusammengeführt und mittels einer Dichtung 18 gegeneinander abgedichtet, um einen geschlossenen Innenraum zu bilden, in welchen die Formwandteile 15 und 16 eingesetzt sind. Die Formwandteile 15 und 16 sind mittels solcher Halterungen 19 in den Außenwandteilen der Dampfkammerhälften 11 und 12 befestigt, die Durchlässe 20 bilden, so daß bei geschlossener Form der von den beiden Dampfkammerhälften 11 und 12 umschlossene Innenraum eine gemeinsame Dampfkammer 21 bildet, wobei die Formwandteile 15 und 16 innerhalb der Dampfkammer 21 an ihren Umfangsrändern aufeinandersitzen. Im Beispiel der Figuren 1 und 2 sind an diesen Umfangsrändern Durchlässe 43 in Form von sich in Umfangsrichtung des Formhohlraumes 17 erstreckenden, etwa 0,2 mm breiten und bis zu mehreren Zentimeter langen Schlitzen gebildet. Im Beispiel der Figur 3 sind die Randbereiche der Formwandteile 15 und 16 derart ausgebildet, daß sich der Umfangsrand des haubenförmigen Formwandteiles 15 dichtend auf den Umfangsrand des kernförmig ausgebildeten Formwandteiles 16 aufsetzt. Jedoch sind innerhalb des Umfangsrandes des kernförmigen Formwandteiles 16 düsenförmige Durchlässe 43' ringsum in Abständen angebracht, die eine von Luft und Dampf durchströmbare Verbindung zwischen dem Formhohlraum 17 und der Dampfkammer 21 bilden. Um ein sattes Aufeinandersitzen der Formwandteile 15, 16 mit ihren Umfangsrändern bei dichtend zusammengedrücktem Dichtungselement 18 zu gewährleisten, kann in beiden Ausführungen das Formwandteil 16 mit elastisch puffernden Befestigungselementen (44) im Dampfkammerteil 12 angebracht werden.

An die Dampfkammer 21 sind mindestens ein Dampfeinlaß 22 mit an der Maschine zentral gesteuertem Dampfeinlaßventil 23 und mindestens ein Dampfauslaß 24 mit ebenfalls zentral gesteuertem Dampfauslaßventil 25 angeschlossen. Ferner ist an die Dampfkammer 21 ein Vakuumanschluß 26 mit zentral gesteuertem Absaugventil 27 angeschlossen.

In die Dampfkammer 21 können ferner Sprüheinrichtungen 28 zum Aufbringen einer Kühlflüssigkeit eingesetzt werden. Diese Sprüheinrichtungen 28 sind ebenfalls mit zentral gesteuerten Ventilen 29 ausgestattet. Sie dienen zur Befeuchtung der der Dampfkammer 21 zugewandten Oberfläche der Formwandteile 15 und 16 zu deren Kühlung. Aufbau und Arbeitsweise dieser Einrichtungen können der deutschen Patentanmeldung P 38 36 875.7 entsprechen.

An den Formhohlraum 17 ist mindestens eine Verbindungsleitung 30 angeschlossen, die im dargestellten Beispiel durch das Formwandteil 15 und durch die Dampfkammerhaube 11 geführt ist. An diese Verbindungsleitung 30 ist die Einfülleinrichtung 31 für die zu verarbeitenden vorgeschäumten Kunststoffteilchen angesetzt. Diese Fülleinrichtung weist einen geschlossenen Rohstoffbehälter 32 auf, und ist an sich bekannt. In die Anschlußleitung 33 vom Rohstoffbehälter 32 zur Verbindungsleitung 30 ist mindestens ein zentral gesteuertes Rohstoffventil 34 eingesetzt. Ferner ist in der Verbindungsleitung 30 als weiterer Teil der Einfülleinrichtung 31 eine Pinole 35 zwischen der in Figur 1 voll ausgezeichneten Schließstellung und der gestrichelt dargestellten Öffnungsstellung axial verschiebbar gelagert. Diese Pinole 35 hat in der gezeichneten Ausführungsform in ihrer Pinolenplatte Durchlaßbohrungen 36, die jedoch den Durchtritt von vorgeschäumten Kunststoffteilchen nicht zulassen. Anstelle der Bohrungen 36 in der Pinolenplatte 35 könnten auch in der Wand der Verbindungsleitung 30 die Pinolenplatte in Schließstellung überbrückende Kanäle 36', beispielsweise axiale Nuten oder Bohrungen, vorgesehen sein, wie sie in Figur 1 gestrichelt angedeutet sind.

An die Verbindungsleitung 30 ist eine Betriebsleitung 37 angeschlossen, die die für den Betrieb des Formwerkzeugs erforderlichen Ventile aufweist:
ein zentral gesteuertes Fülluft-Ventil 38, dem die zum Betrieb der Einfülleinrichtung 31 in Art eines Injektors und zum Verteilen der Kunststoffteilchen im Formhohlraum 17 erforderliche Luft zugeführt wird, ein zentral gesteuertes Gegendruckventil 39, dem Druckluft mit einem Druck zugeführt wird, der gleich oder etwas höher als der Druck des in die Dampfkammer 21 eingeführten Wasserdampfes ist,
ein Dampfablaßventil 40 mit nachgeschalteter, einstellbarer Strömungsdrossel 41 zum Ablassen von in dem Formhohlraum enthaltener Luft und Ablassen von den Formhohlraum durchspülendem Dampf und
ein Absaugventil 42, das an eine Vakuumeinrichtung angeschlossen ist.

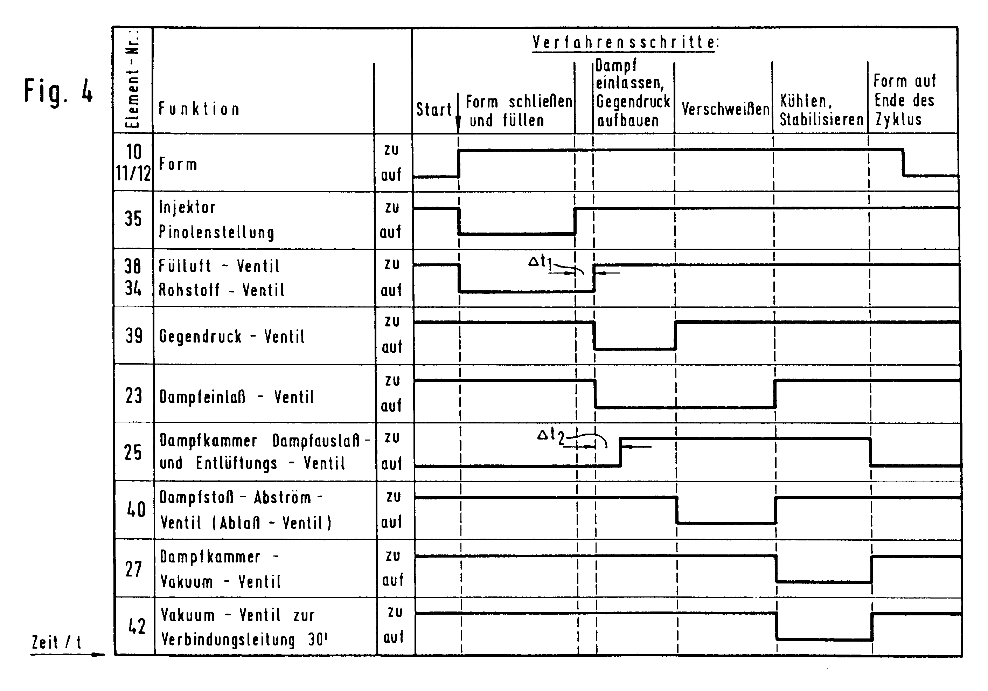

Diese Vorrichtung eigent sich für die Durchführung des folgenden besonderen Verfahrens zur Herstellung von Formlingen aus aufgeschäumtem Kunststoff. Die Verfahrensweise sei anhand von Figur 4 wie folgt erläutert:
Bei Beginn des Arbeitszyklus wird zunächst die Form geschlossen, so daß durch die beiden Dampfkammerteile 11 und 12 an der Dichtungseinrichtung 18 eine - abgesehen von den ventilgesteuerten Anschlüssen - geschlossene einheitliche Dampfkammer 21 gebildet wird. Ist die Form geschlossen, wird die Einfülleinrichtung 31 in Gang gesetzt. Hierzu wird die Pinolenplatte 35 in die gestrichelt dargestellte Öffnungsstellung bewegt. Das Rohstoffventil 34 und das Fülluft-Ventil 38 werden geöffnet. Das Gegendruckventil 39 und das Dampfabströmventil 40 sind geschlossen, während das Dampfauslaßventil 25 an der Dampfkammer 21 geöffnet ist. Bei dieser Stellung der Ventile wird Rohstoff aus dem Behälter 32 über das Rohstoffventil 34 in die Verbindungsleitung 30 gesaugt oder gedrückt und dort von der vom Ventil 38 her kommenden und die Bohrungen 36 der Pinolenplatte 35 durchströmenden Fülluft erfaßt und im Formhohlraum 17 verteilt. Die Luftströmung durchsetzt die vom Formhohlraum 17 in die Dampfkammer führenden Durchlässe 43, die im Beispiel der Figur 1 als ständig offene Durchlaßschlitze von beispielsweise 0,2 mm Breite am Umfangsrand des Formwerkzeugteiles 15 verteilt sind. Die die Durchlässe 43 durchsetzende Luft strömt durch die Dampfkammer 21 und das geöffnete Dampfablaßventil 25 nach außen.

Zum Abschluß des Füllvorganges wird die Pinolenplatte in die untere Endstellung bewegt, während das Fülluft-Ventil 38 und das Rohstoffventil 34 noch über einen Zeitraum t₁ von beispielsweise zwischen 0,1s und 1s geöffnet bleibt, damit sämtliche in der Anschlußleitung 33 vorhandene Kunststoffteilchen in den Rohstoffbehälter zurückgeführt werden. Mit dem Schließen der Ventils 34 und 38 werden das Gegendruckventil 39 und das Dampfeinlaßventil 23 geöffnet. Es setzt hierdurch ein Durchspülen der Dampfkammer 21 mit Dampf ein, wobei die dort vorhandene Luft solange ausgespült wird, bis nach Ablauf eines Spülzeitraumes Δ t₂ seit Öffnen des Dampfeinlaßventils 23 das Dampfauslaßventil 25 an der Dampfkammer 21 geschlossen wird. Die Dampfkammer 21 wird nun mit Sattdampf gefüllt, bis sich ein für das Aufheizen der Formwandteile 15 und 16 gewünschter Druck aufgebaut hat. Gleichzeitig wird vom Gegendruckventil 39 her Druckluft solange in den Formhohlraum 17 eingeführt, bis sich dort ein Gegendruck aufgebaut hat, der ebenso hoch wie der Druck des Dampfes in der Dampfkammer 21 ist oder diesen noch etwas übersteigt.

Der Aufbau des Gegendruckes im Formhohlraum 17 in Vergleich mit dem in der Dampfkammer 21 aufgebauten Druck des Sattdampfes kann mit Einstellung von Hand oder mittels Einsatz eines Differenzdruckventils geregelt werden. Durch den Aufbau des Gegendruckes im Formhohlraum 17 wird verhindert, daß Dampf von der Dampfkammer 21 über die Durchlässe 43 in den Formhohlraum 17 gelangt. Eher wird etwas Druckluft aus dem Formhohlraum 17 durch die Durchlässe 43 in die Dampfkammer 21 strömen.

Nach Ablauf der gewünschten Aufheizzeit an den Formwandteilen 15 und 16 erfolgt das Verschweißen der aufgeschäumten Kunststoffteilchen mittels Dampf. Hierzu wird das Gegendruckventil 39 geschlossen und das Dampfablassventil 40 geöffnet, nachdem die Strömungsdrossel 41 auf einen gewünschten Strömungswert eingestellt worden ist. Der Druck der zwischen den Kunststoffteilchen vorhandenen Luft sinkt dadurch ab. Dadurch wird von der Dampfkammer 21 und unter ständiger Nachlieferung über das geöffnete Dampfeinlaßventil 23 Dampf an den Durchlässen 43 in den Formhohlraum 17 und durch die poröse Kunststoffüllung des Formhohlraumes hindurch gedrückt. Dieser Dampf, der die Füllung des Formhohlraumes 17 in Art eines Dampfstoßes strömt, durchsetzt dann durch die Bohrungen 36 der Pinolenplatte 35 und durch die Verbindungsleitung 30, die Betriebsleitung 37, das Dampfablassventil 40 und die Strömungsdrossel 41 nach außen. Durch diese Dampfführung wird erreicht, daß zwischen Formhohlraum 17 und Dampfkammer 21 nur eine so geringe Druckdifferenz aufgebaut wird, wie sie für das gewünschte Strömungsverhalten notwendig ist. Dieses Verschweißen der Kunststoffteilchen mittels Dampfdurchspülung kann über einen Zeitraum von beispielsweise 1s ausgeführt werden. Der zum Verschweißen benutzte Sattdampf kann materialabhängig eine Temperatur zwischen 110°C und 160°C aufweisen. Nach Ablauf des Verschweißungsschrittes werden das Dampfablassventil 40 und das Dampfeinlaßventil 23 geschlossen. Die Ventile 29 zum Zuführen von Kühlflüssigkeit werden bei Bedarf geöffnet. Es werden ferner die Absaugventile 27 und 42 geöffnet. Auf diese Weise erfolgt gleichzeitig das Absaugen des Dampfes aus der Verbindungsleitung 30 und der Betriebsleitung 37 sowie das Absaugen des Dampfes aus der Dampfkammer 21. Auf der der Dampfkammer 21 zugewandten Oberfläche der Formwandteile 15 und 16 aufgefangenes Kondensat bzw. dort aufgesprühte Kühlflüssigkeit werden ebenfalls verdampft, so daß mit dem Absaugen die Formwandteile 15 und 16 gekühlt werden.
Zum Aufheizen für den Formvorgang werden die Formwandteile mittels des der Dampfkammer 21 zugeführten Sattdampfes auf 110°C bis 160°C aufgeheizt, während bei dem Kühlvorgang eine Herabsetzung der Temperatur an den Formwandteilen 15 und 16 auf materialabhängig etwa 60°C bis 100°C vorgenommen wird. Für das Öffnen der Form ist das Absaugventil 27 zu schließen und die Dampfkammer zu belüften, während das Absaugventil 42 noch geöffnet bleiben kann, um den Formling am Formwandteil 15 festzuhalten. Nach Öffnen der Form ist dann das Absaugventil 42 zu schließen und evtl. eines der Druckluftventile 38 oder 39 kurzzeitig zu öffnen, falls es erwünscht ist, den Formling mittels Druckluft von dem Formwandteil 15 abzustoßen. Der Arbeitszyklus ist damit beendet und ist dann in der beschriebenen Weise zu wiederholen.

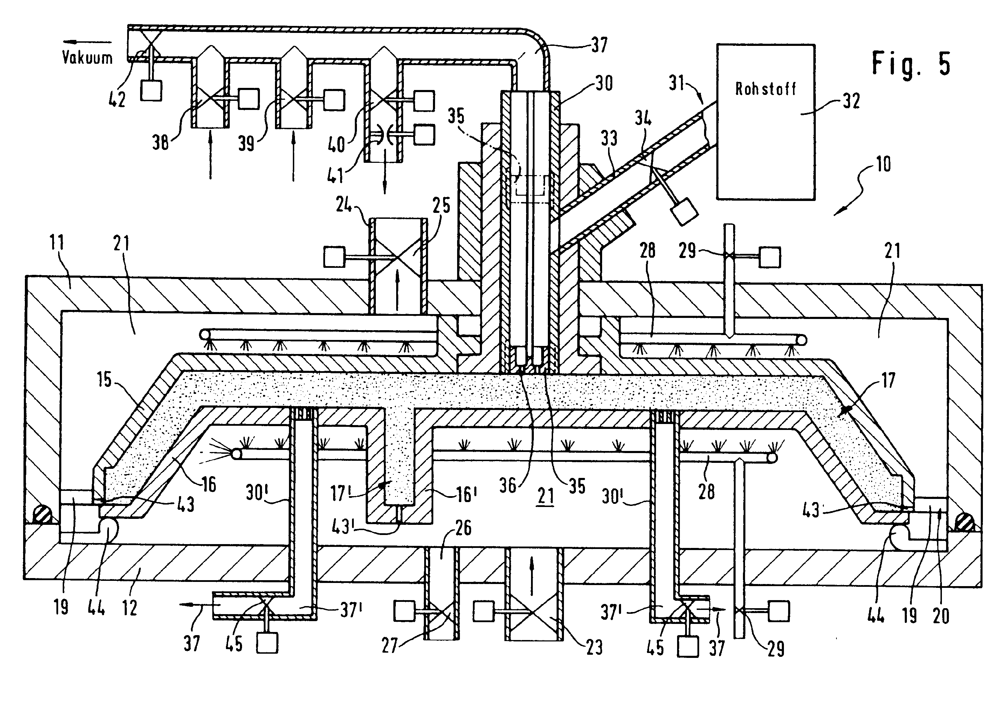

Die in Figur 5 dargestellte Ausführungsform des Schäumformwerkzeugs weist im Grundsatz gleichen Aufbau wie das Werkzeug gemäß Figur 1 auf. Zusätzlich zeigt Figur 5 einen Formhohlraum 17', der für die Bildung eines Formlings mit Zwischenwand ausgebildet ist. In diesem Fall ist für das Ablassen der Fülluft aus dem Formhohlraum 17' und zum Einführen von Verschweißungsdampf in den Formhohlraum 17' eine zusätzliche funktionsgeeignete und erforderliche Stelle an der die Zwischenwand des Formlings bildenden Vertiefung des Formhohlraums 17' gegeben. Es sind deshalb dort in der Formlingwand 16' zusätzliche Durchlaßöffnungen 43' vorgesehen.

Für kompliziertere Ausbildung des Formhohlraumes empfiehlt es sich, zusätzliche Verbindungsleitungen 30' über Betriebsleitungen 37' zur Betriebsleitung 37 vorzusehen, die jedoch nicht mit einer Einfülleinrichtung 31 verbunden sein müssen. In diesem Falle entfällt auch die Eingabe von Fülluft in die Verbindungsleitungen 31. Figur 5 zeigt an dem Formwandteil 16', die Verbindungsleitungen 30' und Betriebsleitungen 37', wobei über Ventile 45 verhindert wird, daß Fülluft an diesen Stellen in den Formhohlraum 17 bzw. 17' eingelassen wird. Der Betriebsablauf und die Steuerung dieser Einrichtungen sind analog der oben beschriebenen Betriebs- und Verfahrensweise für die Vorrichtung gemäß Figur 1.

## Patentansprüche

1. Verfahren zum Herstellen von Formlingen aus aufgeschäumtem, thermoplastischem Kunststoff, das vorsieht, vorgeschäumte Kunststoffteilchen unter Anwendung eines Luftstromes in einen Formhohlraum (17, 17') einzutragen und in diesem zu verteilen und unter weiterem Aufschäumen zu einem Formling zu vereinigen, bei welchem Verfahren die den Formhohlraum (17, 17') mit seiner Füllung von vorgeschäumten, thermoplastischen Kunststoffteilchen umschließenden Formwandteile (15, 16) dadurch auf eine gewünschte Formtemperatur aufgeheizt werden, daß Wasserdampf unter Druck in mindestens eine an den Außenseite der Formwandteile (15, 16) angeordnete Dampfkammer (21) eingeleitet wird, nach dem Aufheizen der Formwandteile (15, 16) Dampf von der Dampfkammer (21) in den Formhohlraum (17, 17') und in dessen Füllung übergeführt wird, wodurch die Kunststoffteilchen unter Wirkung von Wärme und Dampf weiter aufgeschäumt und miteinander verschweißt bzw. versintert werden, und bei welchem Verfahren der so gebildete Formling von den Formoberflächen des Formhohlraumes (17, 17') her gekühlt und nach im wesentlichen Erreichen seiner Formbeständigkeit aus dem Formhohlraum (17, 17') entfernt wird,
dadurch gekennzeichnet, daß
während des Aufheizens der Formwandteile (15, 16) innerhalb des Formhohlraumes (17, 17') zwischen den Kunststoffteilchen der Füllung ein Lufteinschluß mit zumindest gleichem Druck wie der des zum Aufheizen der Formwandteile (15, 16) eingesetzten Dampfes aufrechterhalten und damit das Eindringen von Dampf zwischen die Kunststoffteilchen der Füllung verhindert wird und daß zum Einlassen von Dampf in den Formhohlraum (17, 17') nach dem Aufheizen der Formwandteile (15, 16) durch Druckluftabbau der Lufteinschluß weggespült und die Füllung von Kunststoffteilchen im Formhohlraum (17, 17') mit Dampf durchströmt wird, derart, daß das Aufheizen und Verschweißen bzw. Versintern der Kunststoffteilchen ohne Kondensatbildung oder mit nur sehr geringer Kondensatbildung durchgeführt wird.

2. Verfahren nach Anspruch 1, dadurch gekennzeichnet, daß der anschließend an das Füllen des Formhohlraumes (17, 17') zwischen den Kunststoffteilchen über die Dauer des Aufheizvorganges aufrechterhaltene Lufteinschluß unter solchem geringen Überdruck gegenüber dem Druck des zum Aufheizen der Formwandteile (15, 16) eingesetzten Dampfes gehalten ist, daß nur eine vernachlässigbar kleine Luftmenge vom Formhohlraum (17, 17') in die Dampfkammer (21) übertritt, die jedoch ausreicht, den Übertritt von Dampf in die Füllung des Formhohlraumes (17, 17') während des Aufheizens der Formwandteile (15, 16) mit Sicherheit zu verhindern.

3. Verfahren nach Anspruch 1 oder 2, dadurch gekennzeichnet, daß der während des Aufheizvorganges der Formwandteile (15, 16) aufrechterhaltene Lufteinschluß mit vorgewärmter Druckluft erzeugt wird.

4. Verfahren nach Anspruch 3, dadurch gekennzeichnet, daß die für die Erzeugung des Lufteinschlusses eingesetzte Druckluft auf eine Temperatur unterhalb der Erweichungstemperatur des zu verarbeitenden Kunststoffes, beispielsweise bei Verarbeitung von aufgeschäumtem Polystyrol im Bereich von etwa 60°C bis etwa 70°C, vorerwärmt wird.

5. Verfahren nach einem der Ansprüche 1 bis 4, dadurch gekennzeichnet, daß die an der Außenseite der Formwandteile (15, 16) gebildete Dampfkammer (21) bei Beginn des Aufheizvorganges über eine Zeitdauer Δ t₂ von bis zu 1s mit Dampf durchspült wird und daß dann der für den Aufheizvorgang eingesetzte Dampf in der Dampfkammer (21) gehalten und auf den für den Aufheizvorgang gewünschten Druck gebracht wird.

6. Verfahren nach einem der Ansprüche 1 bis 5, dadurch gekennzeichnet, daß das kühlen der Formwandteile (15, 16) durch Verdampfen von auf der Außenseite der Formwandteile (15, 16) aufgefangenem Kondensat und/oder auf die Außenseite der Formwandteile (15, 16) aufgebrachtem Kondensat unter Erzeugen von Vakuum ausgeführt wird.

7. Verfahren nach Anspruch 6, dadurch gekennzeichnet, daß ein Gemisch von Wasserdampf und Wasserdampf-kondensat zum kühlen auf die Außenseite der Formwandteile (15, 16) gesprüht wird.

8. Verfahren nach Anspruch 6 oder 7, dadurch gekennzeichnet, daß zum Kühlen der Formwandteile (15, 16) und des Formlings der den Formling enthaltende Formhohlraum (17, 17') und die an der Außenseite der Formwandteile (15, 16) gebildete, mindestens eine Dampfkammer (21) im wesentlichen gleichzeitig evakuiert werden.

9. Vorrichtung zur Durchführung des Verfahrens nach einem der Ansprüche 1 bis 8, mit einer geteilten Form mit Formwandteilen (15, 16) die zwischen sich einen Formhohlraum (17, 17') bilden und an deren Außenseite mindestens eine Dampfkammer gebildet ist, die mittels Ventile (23, 25, 27) steuerbar mit einer Dampfzufuhr, Außenluft und mit einer Absaugeinrichtung verbindbar ist und an den Formwandteilen (15, 16) Durchlässe (42, 43') zur Dampfkammer (21) zum Auslassen der zum Füllen eingesetzten Luft und zum Einlassen des zum Verschweißen bzw. Veraintern der Kunststoffteilchen eingesetzten Dampfes angebracht sind,
dadurch gekennzeichnet, daß
der Formhohlraum (17, 17') über mindestens eine zur Außenseite eines Dampfkammerteiles (11, 12) führenden Verbindungsleitung (30, 30') mit einer ventilgesteuerten Betriebsleitung (37, 37') zum Zuführen von Druckluft und Absaugen von Dampf verbunden ist, während jeder der an den Formwandteilen (15, 16) gebildeten Durchlässe (43, 43') sowohl für das Auslassen der zum Füllen eingesetzten Druckluft aus dem Formhohlraum (17, 17') auch als freie Durchlaßverbindung zwischen der Dampfkammer (21) und dem Formhohlraum (17, 17') ausgebildet und an für beide Funktionen geeigneter Stelle angeordnet ist.

10. Vorrichtung nach Anspruch 9, dadurch gekennzeichnet, daß die Verbindungsleitung (30) auch die Vorrichtung (31) zum Einführen der vorgeschäumten Kunststoffteilchen in den Formhohlraum (17, 17') aufnimmt.

11. Vorrichtung nach Anspruch 10, dadurch gekennzeichnet, daß die mit für das Einführen der vorgeschäumten Kunststoffteilchen geeignet weitem Querschnitt ausgebildete Verbindungsleitung (30) eine kolbenartige Pinolenplatte (35) als nach dem Füllvorgang zu schließendes Verschlußelement für den Formhohlraum aufweist und daß dieser Pinolenplatte (35) Durchlässe (36, 36') zum Formhohlraum (17, 17') zugeordnet sind.

12. Vorrichtung nach Anspruch 11, dadurch gekennzeichnet, daß die pinolenplatte mit Durchlaßöffnungen (36) versehen ist.

13. Vorrichtung nach einem der Ansprüche 9 bis 12 mit zwei trennbaren Formwerkzeughälften, dadurch gekennzeichnet, daß die Formwandteile (15, 16) an der zwischen ihnen bei geschlossener Schäumvorrichtung (10) gebildeten Trennlinie mit auch bei geschlossener Schäumvorrichtung (10) offen bleibenden Durchlässen (43) zwischen dem Formhohlraum (17, 17') und der an der Außenseite der Formwandteile (15, 16) gebildeten, mindestens einer Dampfkammer (21) ausgebildet sind.

14. Vorrichtung nach Anspruch 13, dadurch gekennzeichnet, daß die Durchlässe (43) als mindestens ein bei geschlossener Schäumvorrichtung (10) entlang der Trennlinie angeordneter Durchlaßschlitz ausgebildet sind.

15. Vorrichtung nach Anspruch 13, dadurch gekennzeichnet, daß die Durchlässe (43) als eine sich bei geschlossener Schäumvorrichtung (10) entlang der Trennlinie erstreckende Reihe unterbrochener Durchlaßschlitze ausgebildet sind.

16. Vorrichtung nach Anspruch 14 oder 15, dadurch gekennzeichnet, daß der Durchlaßschlitz bzw. die Durchlaßschlitze eine Breite von im wesentlichen 0,2 mm aufweist bzw. aufweisen.

17. Vorrichtung nach einem der Ansprüche 13 bis 16, dadurch. gekennzeichnet, daß die Trennlinie zwischen den bei geschlossener Schäumvorrichtung (10) zusammengeführten Formwandteilen (15, 16) im wesentlichen am Umfang des Formhohlraumes (17, 17') liegt.

18. Vorrichtung nach einem der Ansprüche 9 bis 17, dadurch gekennzeichnet, daß eine Mehrzahl von aus dem Formhohlraum (17, 17') nach außen führenden Verbindungsleitungen (30, 30') vorgesehen ist, von welchen eine oder mehrere Verbindungsleitungen (30) mit einer Vorrichtung (31) zum Einführen der vorgeschäumten Kunststoffteilchen in den Formhohlraum (17, 17') ausgestattet ist.

19. Vorrichtung nach Anspruch 18, dadurch gekennzeichnet, daß sämtliche Verbindungsleitungen (30, 30') an dieselbe Betriebsleitung angeschlossen sind.

20. Vorrichtung nach einem der Ansprüche 9 bis 19, dadurch gekennzeichnet, daß die Formwandteile (15, 16) mittels Strömungsdurchlässe (20) freilassenden Befestigungselementen (19, 44) in den Außenwandteilen Dampfkammerhälften (11, 12) gehalten sind und die Außenwandteile unter Bildung einer alle Formwandteile (15, 16) umgebenden gemeinsamen Dampfkammer (21) bei geschlossener Schäumvorrichtung (10) gegeneinander abgedichtet sind.

21. Vorrichtung nach Anspruch 20, dadurch gekennzeichnet, daß die in der einen Dampfkammerhälfte, beispielsweise im Kernteil (12) angebrachten Formwandteile (16), auf puffernden Befestigungselementen (44) angebracht sind.

## Claims

1. Method for manufacturing articles of an expanded thermoplastic synthetic material, which method, in using an air current, provides to place prefoamed synthetic particles into a mold cavity (17, 17') and to distribute therein and, by further expanding, to combine them to a molded article, in which process the mold wall parts (15, 16) embracing said mold cavity (17, 17') and having a load of prefoamed thermoplastic synthetic particles are heated to a desired molding temperature by introducing steem under pressure into at least one steam chamber (21) positioned at the outside of said mold wall parts, the steam being circulated from the steam chamber (21) in the mold cavity (17, 17') and in the load thereof after the mold wall parts (15, 16) have been heated, by which process the syntheitic particles are further expanded and fused or sintered to each other by the effect of heat and steam, and in which method the molded article thus formed is cooled by use of the mold surfaces and the mold cavity (17, 17') and removed from the mold cavity (17, 17') after having essentially reached stability of shape,
characterized in that
in the course of heating the mold wall parts (15, 16), within the mold cavity (17, 17') between said synthetic particles of the load, an inclusion of air is maintained having a pressure which is at least as great as the pressure of the steam used to heat the mold wall parts (15, 16) thus preventing the penetration of steam between the synthetic particles of the load, and in that, in order to make steam enter into the mold cavity (17, 17'), after the mold wall parts (15, 16) have been heated, by reducing the air pressure, said inclusion of air is rinsed away and the load of synthetic particles in the mold cavity (17, 17') is flushed by steam, such that the heating and fusing or sintering of said synthetic particles is performed with very little or no condensate formation.

2. Method according to claim 1, characterized in that, subsequent to the loading of the mold cavity (17, 17'), the inclusion of air being maintained between the synthetic particles during the heating process is kept under such a low overpressure over the pressure of the steam used to heat the mold wall parts (15, 16) that only a neglectably small amount of air from the mold cavity (17, 17') passes into the steam chamber (21) which, however, is sufficient to definitely prevent the permeation of steam into the load of the mold cavity (17, 17') in the course of heating up the mold wall parts (15, 16).

3. Method according to claims 1 or 2, characterized in that the inclusion of air being maintained in the course of the heating process of the mold wall parts (15, 16) is generated by preheated compressed air.

4. Method according to claim 3, characterized in that the compressed air used for the generation of the inclusion of air is preheated to a temperature below the softening temperature of the synthetic material to be processed, e.g. in the course of processing expanded polystyrene in the range of about 16° C to about 70° C.

5. Method according to one of claims 1 to 4, characterized in that, at the beginning of the heating up process, the steam chamber (21) formed on the outside of the mold wall parts (15, 16) is flushed with steam for a time Δ t₂ of up to 1 second and in that the steam used for the heating-up process is subsequently kept in the steam chamber (21) and brought to the pressure desired for the heating-up process.

6. Method according to one of claims 1 to 5, characterized in that cooling of the mold wall parts (15, 16) is performed by volatilization of condensate collected on the outside of the mold wall parts (15, 16) and/or of the condensate deposited on the outside of the mold wall parts (15, 16) by means of generation of a vacuum.

7. Method according to claim 6, characterized in that, for the purpose of cooling, a mixture of steam or condensate of steam is sprayed onto the outside of the mold wall parts (15, 16).

8. Method according to claims 6 or 7, characterized in that, for the purpose of cooling the mold wall parts (15, 16) and the molded article, the mold cavity (17, 17') containing the molded article and the at least one steam chamber (21) formed on the outside of the mold wall parts (15, 16) are evacuated essentially simultaneously.

9. Apparatus for the execution of the method according to one of claims 1 to 8, having a split mold forming a mold cavity (17, 17') between the mold wall parts (15, 16) and at the outside of which being formed at least one steam chamber (21) being connectable by means of controllable valves (23, 25, 27) to a steam supply, to the outside air and to a scavenging device and, at the mold wall parts (15, 16), there being provided passages (42, 43') towards the steam chamber (21) to discharge the air used for loading and let in the steam used for fusing and sintering the synthetic particles,
characterized in that
the mold cavity (17, 17') is connected via at least one connecting conduit (30, 30') leading to the outside of a steam chamber part (11, 12) and having a valve-controlled operating line (37, 37') for the supply of compressed air and the removal of steam, whilst each one of said passages (43, 43') formed on the mold wall parts (15, 16) is developed so as to discharge the compressed air used for loading from the mold cavity (17, 17') and also developed as a free passage-way between the steam chamber (21) and the mold cavity (17, 17') and each one of said passages being disposed in places suited for both functions.

10. Apparatus according to claim 9, characterized in that the connecting conduit (30) also contains the device (31) for the introduction of prefoamed synthetic articles into the mold cavity (17, 17').

11. Apparatus according to claim 10, characterized in that the connection conduit (30) being developed with a wide cross-section in order to introduce the prefoamed synthetic articles, comprises a piston-like quill plate (35) as a sealing element to be closed after the filling procedure and in that passages (36, 36') towards the mold cavity (17, 17') are allocated to the said quill plate (35).

12. Apparatus according to claim 11, characterized in that the quill plate is provided with transfer openings (36).

13. Apparatus according to one of claims 9 to 12, having two seperable mold halfs, characterized in that, at the separating line formed between the mold wall parts when the foaming device (10) is closed, said mold wall parts (15, 16) are developed with passages (43) between the mold cavity (17, 17') and the at least one steam chamber (21) formed at the outside of the mold wall parts (15, 16), the said passages also remaining unclosed when the foaming device (10) is closed.

14. Apparatus according to claim 13, characterized in that the passages (43) are developed as at least one passage slid being arranged along the separating line when the foaming device (10) is closed.

15. Apparatus according to claim 13, characterized in that the passages (43) are developed as a series of interrupted passage slids running along the separation line when the foaming device (10) is closed.

16. Apparatus according to claims 14 or 15, characterized in that the passage slid or the passage slids has or have a width of essentially 0.2 mm.

17. Apparatus according to one of claims 13 to 16, characterized in that the separation line between the mold wall part (15, 16) joined when the foaming device (10) is closed, is essentially situated at the circumference of the mold cavity (17, 17').

18. Apparatus according to one of claims 9 to 17, characterized in that there is provided a plurality of connecting conduits (30, 30') leading from the mold cavity (17, 17') outwards of which one or several connecting conduits (30) are equipped with a device (31) to introduce the prefoamed synthetic particles into the mold cavity (17, 17').

19. Apparatus according to claim 18, characterized in that all connecting conduits (30, 30') are connected to one and the same operating line.

20. Apparatus according to one of claims 9 to 19, characterized in that, at the outer wall parts of the steam chamber halfs (11, 12), the mold wall parts (15, 16) are held by means of fastening elements sparing the flow passages (20) and the outer wall parts are sealed one against the other in forming a common steam chamber (21) surrounding all mold wall parts (15, 16) when the foaming device (10) is closed.

21. Apparatus according to claim 20, characterized in that the mold wall parts (16) in one of the steam chamber halfs, e.g. in the core part (12), are mounted on buffering fastening elements (44).

## Revendications

1. Procédé de fabrication d'articles moulés en matière thermoplastique expansée qui prévoit d'introduire des particules de matière plastique pré-expansée dans la chambre (17, 17') d'un moule en utilisant un flux d'air, de les répartir dans ladite chambre et de les lier pour former un article moulé en poursuivant leur expansion, procédé dans lequel on chauffe à une température de moulage souhaitée les parties de paroi (15, 16) du moule qui entourent la chambre de moulage (17, 17') avec sa charge de particules pré-expansées de matière thermoplastique en introduisant de la vapeur d'eau sous pression dans au moins une chambre de vapeur (21) agencée sur la face extérieure des parties de paroi de moule (15, 16), après chauffage des parties de paroi de moule (15, 16) on fait passer la vapeur de la chambre de vapeur (21) dans la chambre de moulage (17, 17'), ce qui a pour effet d'entraîner une expansion supplémentaire des particules de matière plastique sous l'action de la chaleur et de les souder entre elles ou de les fritter, on refroidit l'article moulé ainsi formé à partir des surfaces de la chambre de moulage (17, 17') et on retire l'article moulé de la chambre de moulage (17, 17') lorsque celui-ci a pratiquement atteint sa stabilité de forme, procédé caractérisé par le fait que, pendant le chauffage des parties de paroi de moule (15, 16), on maintient à l'intérieur de la chambre de moulage (17, 17'), entre les particules de matière plastique de la charge, de l'air emprisonne à une pression qui est au moins égale à celle de la vapeur utilisée pour le chauffage des parties de paroi de moule (15, 16) et on empêche ainsi la pénétration de vapeur entre les particules de matière plastique et par le fait que, pour l'admission de vapeur dans la chambre de moulage (17, 17') après chauffage des parties de paroi (15, 16), on évacue la poche d'air en relâchant la pression et on fait circuler de la vapeur dans la charge de particules de matière plastique contenue dans la chambre de moulage (17, 17') de manière telle que le réchauffage et le soudage voire le frittage des particules ait lieu sans formation de condensat ou avec une très formation de condensat seulement.

2. Procédé selon la revendication 1, caractérisé par le fait que la poche d'air qui est maintenue entre les particules de matière plastique, pendant toute la durée de la phase de chauffage, après remplissage de la chambre de moulage (17, 17') est maintenue à une pression telle par rapport à celle de la vapeur utilisée pour chauffer les parties de paroi de moule (15, 16) que seule une quantité d'air négligeable passe de la chambre de moulage (17, 17') dans la chambre de vapeur (21), pression qui est cependant suffisante pour empêcher de manière sûre la pénétration de vapeur dans la charge de la chambre de moulage (17, 17') pendant le chauffage des parties de paroi de moule (15, 16).

3. Procédé selon la revendication 1 ou 2, caractérisé par le fait que la poche d'air maintenue pendant la phase de chauffage des parties de paroi de moule (15, 16) est produite au moyen d'air comprimé pré-chauffé.

4. Procédé selon la revendication 3, caractérisé par le fait que l'air comprimé utilisé pour former la poche d'air est réchauffé à une température qui est inférieure à la température de ramollissement de la matière plastique à travailler, par exemple à une température comprise entre 60 °C et 70 °C dans le cas de polystyrène expansé.

5. Procédé selon l'une des revendications 1 à 4, caractérisé par le fait qu'au début de la phase de chauffage, la chambre de vapeur (21) agencée sur la face extérieure des parties de paroi de moule (15, 16) est balayée par de la vapeur pendant un laps de temps Δt₂ allant jusqu'à 1 s, puis la vapeur utilisée pour le chauffage est maintenue dans la chambre de vapeur (21) et amenée à la pression souhaitée pour le chauffage.

6. Procédé selon l'une des revendications 1 à 5, caractérisé par le fait que le refroidissement des parties de paroi de moule (15, 16) est obtenu par vaporisation de condensat déposé sur la face extérieure des parties de paroi (15, 16) et/ou de condensat appliqué sur la face extérieure des parties de paroi de moule (15, 16) par production d'une dépression.

7. Procédé selon la revendication 6, caractérisé par le fait que l'on pulvérise un mélange de vapeur d'eau et de condensat de vapeur d'eau sur la face extérieure des parties de paroi de moule (15, 16) à des fins de refroidissement.

8. Procédé selon la revendication 6 ou 7, caractérisé par le fait que, pour refroidir les parties de parois de moule (15, 16) et l'article moulé, on réalise sensiblement simultanément le vide dans la chambre de moulage (17, 17') contenant l'article moulé et dans au moins une chambre de vapeur (21) agencée sur la face extérieure des parties de paroi de moule (15, 16).

9. Dispositif pour la mise en oeuvre du procédé selon l'une des revendications 1 à 8, comportant un moule en plusieurs parties avec des parties de paroi (15, 16) qui définissent entre elles une chambre de moulage (17, 17') et sur la face extérieure desquelles est agencée au moins une chambre de vapeur qui, par des vannes (23, 25, 27), peut être mise en communication de manière contrôlée avec une entrée de vapeur, avec l'air extérieur et avec un dispositif d'extraction, et comportant, dans les parties de paroi de moule (15, 16), des passages (42, 43') menant à la chambre de vapeur (21) aux fins d'évacuer l'air utilise pour le remplissage et d'admettre la vapeur utilisée pour le soudage ou le frittage des particules de matière plastique, caractérisé par le fait que la chambre de moulage (17, 17'), par l'intermédiaire d'au moins une conduite de liaison (30, 30') menant vers l'extérieur de la partie chambre de vapeur (11, 12), communique avec une conduite de service (37, 37') commandée par vanne pour l'admission d'air comprime et l'évacuation de vapeur, tandis que chacun des passages (43, 43') aménagés dans les parties de paroi de moule(15, 16) est agencé simultanément pour l'évacuation hors de la chambre de moulage de l'air comprimé utilisé pour le remplissage et sous forme de conduite de circulation libre entre la chambre de vapeur (21) et la chambre de moulage (17, 17') et est disposé en un emplacement adapté pour les deux fonctions.

10. Dispositif selon la revendication 9, caractérisé par le fait que la conduite de liaison (30) reçoit également le dispositif d'introduction des particules de matière plastique pré-expansée dans la chambre de moulage (17, 17').

11. Dispositif selon la revendication 10, caractérisé par le fait que la conduite de liaison (30) qui présente une section large adaptée pour l'introduction des particules de matière plastique pré-expansée est pourvue d'une plaque (35) en forme de piston comme élément de fermeture de la chambre de moulage après remplissage de celle-ci et par le fait que des orifices (36, 36') de communication avec la chambre de moulage sont associés à ladite plaque (35).

12. Dispositif selon la revendication 11, caractérisé par le fait que la plaque est pourvue d'orifices de passage (36).

13. Dispositif selon l'une des revendications 9 à 12 comportant deux parties de moule séparables, caractérisé par le fait que les parties de parois de moule (15, 16) sont pourvues, au niveau de la ligne de joint obtenue lorsque le dispositif de fabrication d'articles en matière plastique expansée (10) est fermé, de passages (43) qui restent ouverts même lorsque le dispositif est fermé et relient la chambre de moulage (17, 17') à la chambre de vapeur (21) formée côté extérieur des parties de parois de moule (15, 16).

14. Dispositif selon la revendication 13, caractérisé par le fait que les passages (43) sont agencés sous la forme d'au moins une fente disposée le long de la ligne de joint lorsque le dispositif de fabrication d'articles en matière plastique expansée (10) est fermé.

15. Dispositif selon la revendication 13, caractérisé par le fait que les passages (43) sont agencés sous la forme d'une ligne interrompue de fentes, disposée le long de la ligne de joint lorsque le dispositif de fabrication d'articles en matière plastique expansée (10) est fermé.

16. Dispositif selon la revendication 14, caractérisé par le fait que la ou les fente(s) de passage a (ont) une largeur sensiblement de 0,2 mm.

17. Dispositif selon l'une des revendications 13 à 16, caractérisé par le fait que la ligne de joint entre les parties de paroi (15, 16) assemblées lorsque le dispositif de fabrication d'articles en matière plastique expansée (10) est fermé est située essentiellement à la périphérie de la chambre de moulage (17, 17').

18. Dispositif selon l'une des revendications 9 à 17, caractérisé par le fait qu'il est prévu une pluralité de conduites de liaison (30, 30') menant de la chambre de moulage (17, 17') vers l'extérieur, parmi lesquelles une ou plusieurs conduite de liaison (30) sont pourvues d'un dispositif (31) d'introduction des particules de matière plastique pré-expansée (10) dans la chambre de moulage (17, 17').

19. Dispositif selon la revendication 18, caractérisé par le fait que toutes les conduites de liaison (30, 30') sont connectées à la même conduite de travail

20. Dispositif selon l'une des revendications 9 à 19, caractérisé par le fait que les parties de paroi de moule (15, 16) sont tenues par des éléments de fixation (19, 44) des parties de parois extérieures de la chambre de vapeur (11, 12) qui laissent libres les passages (20) et les parties de parois extérieures sont assemblées avec étanchéité en formant une chambre de vapeur (21) commune entourant toutes les parties de parois de moule (15, 16) lorsque le dispositif de fabrication d'articles en matière plastique expansée (10) est fermé.

21. Dispositif selon la revendication 20, caractérisé par le fait que les parties de parois de moule (16) placées dans une moitie de chambre de vapeur, par exemple dans la partie principale (12), sont montées sur des éléments de fixation (44) amortissants.
